(19) Europäisches Patentamt
European Patent Office
Office européen des brevets

(11) **EP 1 447 994 A1**

(12) **EUROPEAN PATENT APPLICATION**
published in accordance with Art. 158(3) EPC

(43) Date of publication:
18.08.2004 Bulletin 2004/34

(51) Int Cl.7: **H04N 9/64**

(21) Application number: 02802060.0

(86) International application number:
**PCT/JP2002/011031**

(22) Date of filing: 24.10.2002

(87) International publication number:
**WO 2003/036990 (01.05.2003 Gazette 2003/18)**

(84) Designated Contracting States:
**AT BE BG CH CY CZ DE DK EE ES FI FR GB GR IE IT LI LU MC NL PT SE SK TR**

(30) Priority: 24.10.2001 JP 2001326731

(71) Applicants:
• **Telecommunications Advancement Organization of Japan**
  **Tokyo 105-0014 (JP)**
• **Olympus Corporation**
  **Tokyo 151-0072 (JP)**
• **MATSUSHITA ELECTRIC INDUSTRIAL CO., LTD.**
  **Kadoma-shi, Osaka 571-8501 (JP)**

(72) Inventors:
• **OHSAWA, K.**
  **Minato-ku, Tokyo 105-0014 (JP)**
• **MOTOMUARA, Hideto**
  **Yokohama-shi, Kanagawa 225-0003 (JP)**

(74) Representative: **von Hellfeld, Axel, Dr. Dipl.-Phys.**
**Wuesthoff & Wuesthoff**
**Patent- und Rechtsanwälte**
**Schweigerstrasse 2**
**81541 München (DE)**

(54) **COLOR VIDEO REPRODUCING SYSTEM**

(57) A color image reproduction system includes: a six-band camera (1) for generating a color video signal; a six-primary-color display (3) for receiving display-signal video data to display an image; and a video converter (2) for converting the color video signal into the display-signal video data using an input profile of the six-band camera (1) and an output profile of the six-primary-color display (3). An input profile assembly of the six-band camera (1) and an output profile assembly of the six-primary-color display (3) each include profile data corresponding to respective frames of an image.

**FIG.4**

**Description**

Technical Field

The present invention relates to a color image reproduction system and, more particularly, to a color image reproduction system for performing a faithful color reproduction processing for video data comprising a plurality of frames.

Background Art

The recent widespread use of color image devices such as digital cameras, scanners, printers, and displays provide general people occasions to handle color images, the occasions being increasing.

On the other hand, electronic commerce over the Internet is growing in recent years. In that field, faithful color reproduction is important. It is desired that an architecture capable of accomplishing faithful color reproduction is established in an open system and is put into practical use.

Hitherto, in a closed system, experts in color adjustment have performed color image processing on the basis of their experiments and techniques. As distinct from that, in order to properly handle color images in an open system, general people require color reproduction information having a common format or an interface to define the color reproduction characteristics of input and output devices, and also need a system for converting colors using the color reproduction information.

The ICC (International Color Consortium) proposes the Color Profile (hereinbelow, referred to as the ICC profile) constituting color reproduction information for the purpose of realizing a system for properly managing and faithfully reproducing colors in an open system. The ICC profile specification is disclosed in Specification ICC.1: 1998-09 (http://www.color.org) [Document 1].

In a color management system, the ICC profile is used by giving correspondence to image data. Thus, faithful color reproduction of an image can be realized.

On the other hand, a video image field, mainly using moving images, uses means different from those using profiles for still images. According to, for example, the NTSC broadcasting specification, signal values are previously mapped to colorimetric values to realize faithful color reproduction.

According to the above means, a picture-taking (shooting) site outputs a correct signal according to the specification. A display site receives the signal and then reproduces an image by means of a display having characteristics according to the specification. Thus, faithful color reproduction of the image can be achieved.

In actuality, however, cameras on the shooting site and displays on the display site are hardly managed properly in accordance with the standard. Additionally, in some cases, the colors of captured images are favorably adjusted and, after that, signals of the resultant images are transmitted. Actually, faithful color reproduction is not performed.

The current color management system using the above-mentioned ICC profiles has been proposed with respect to image data mainly constituting still images. This system is not designed in consideration of faithful color reproduction of video data, in which information of shooting conditions required for color reproduction changes over time.

Accordingly, it is desired that a color image reproduction system capable of faithfully reproducing colors is realized using profiles as color reproduction characteristics supporting video data comprising frames.

The present invention is made in consideration of the above situation and it is an object of the present invention to provide a color image reproduction system capable of realizing faithful color reproduction of video data comprising a plurality of frames.

Disclosure of Invention

To accomplish the above object, according to the present invention (1), there is provided color image reproduction system including: a color video input means; color video output means; and color conversion means for converting color signal of the color video input means into color signal of the color video output means using color reproduction characteristics of the color video input means and those of the color video output means, wherein the color reproduction characteristics of the color video input means and those of the color video output means each include color reproduction characteristics corresponding to respective frames of an image.

According to the present invention (2), in the color image reproduction system according to the present invention (1), when at least one part of information to be described in each color reproduction characteristic corresponding to one frame is the same as information described in the color reproduction characteristic corresponding to the preceding frame, the description of the information is omissible.

According to the present invention (3), in the color image reproduction system according to the present invention (2), each color reproduction characteristic is formed such that when successive predetermined number of frames are arbitrarily selected, all of information to be described in the color reproduction characteristic is written in at least one of the color reproduction characteristics corresponding to the selected frames.

According to the present invention (4), in the color image reproduction system according to the present invention (1), (2), or (3), each color reproduction characteristic of the color video input means includes at least one of the spectral sensitivity of the color video input means, a shooting illumination spectrum, and statistical information of the spectral reflectance of a subject.

According to the present invention (5), in the color image reproduction system according to the present invention (1), (2), or (3), each color reproduction characteristic of the color video output means includes at least one of an output spectrum of the color video output means, tone-scale characteristics, an observation illumination spectrum, and a color matching function.

Brief Description of the Drawings

Fig. 1 is a schematic diagram of a color image reproduction system according to a first embodiment of the present invention.

Fig. 2 is a diagram showing the spectral sensitivity of a six-band camera according to the first embodiment.

Fig. 3 is a diagram showing an emission spectrum comprising six primary colors of a six-primary-color display according to the first embodiment.

Fig. 4 is a block diagram of the structure of a video converter according to the first embodiment.

Fig. 5 is a diagram showing the arrangement of shooting setting information according to the first embodiment.

Fig. 6 is a diagram showing the arrangement of video data according to the first embodiment.

Fig. 7 is a block diagram of the structure of an input-profile formation unit according to the first embodiment.

Fig. 8 is a diagram showing the concept of an input profile forming process in the input-profile formation unit according to the first embodiment.

Fig. 9 is a diagram showing the arrangement of an input profile assembly according to the first embodiment.

Fig. 10 is a block diagram of the structure of a video data input unit according to the first embodiment.

Fig. 11 is a diagram conceptually showing the format of data stored in a video data storage unit according to the first embodiment.

Fig. 12 is a block diagram of the structure of a color conversion unit according to the first embodiment.

Fig. 13 is a diagram conceptually showing a color converting process in the color conversion unit according to the first embodiment.

Fig. 14 is a block diagram showing the structure of a color management module according to the first embodiment.

Fig. 15 is a block diagram of the structure of a color estimation unit according to the first embodiment.

Fig. 16 is a block diagram of the structure of a display color conversion unit according to the first embodiment.

Fig. 17 is a diagram showing the arrangement of profile data of the color image reproduction system according to the first embodiment.

Fig. 18 is a diagram showing the arrangement of profile data of a color image reproduction system according to a second embodiment of the present invention.

Fig. 19 is a diagram of the arrangement of profile data of a color image reproduction system according to a third embodiment of the present invention.

Fig. 20 is a block diagram of the structure of a video converter according to the third embodiment.

Fig. 21 is diagram showing the concept of a video editing process in a video edition unit according to the third embodiment.

Best Mode for Carrying Out the Invention

Embodiments of the present invention will now be described with reference to the drawings.

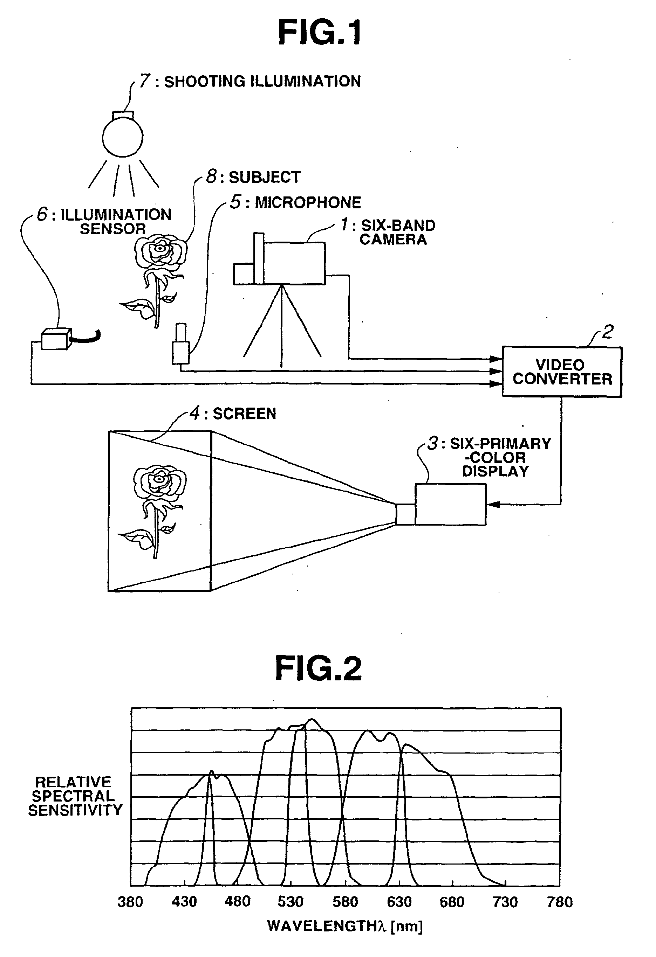

Figs. 1 to 16 illustrate a first embodiment of the present invention. Fig. 1 is a schematic diagram of the arrangement of a color image reproduction system according to the first embodiment.

According to the first embodiment, the color image reproduction system comprises: a six-band camera 1 constituting color video input means for shooting a subject 8 irradiated with a shooting light source 7; a video converter 2 constituting color converting means for converting a color image supplied from the six-band camera 1 into a color image to be output to a six-primary-color display 3, which will be described later; the six-primary-color display 3 functioning as color video output means for projecting the color image converted through the video converter 2 on, for example, a screen 4; an illumination sensor 6 for receiving spectral data of the shooting light source 7; and a microphone 5 for receiving audio data.

The six-band camera 1 captures video data constituting color signals of the subject 8 irradiated with the shooting light source 7 and then outputs the data to the video converter 2. The six-band camera 1 comprises a lens for forming an image of the subject, an optical diverging system for diverging light incident on the lens into light segments in six directions, and six CCDs disposed on the image planes of the light segments diverged through the optical diverging system.

Fig. 2 is a diagram showing the spectral sensitivity of the six-band camera 1.

Referring to Fig. 2, the six-band camera 1 has six independent spectral sensitivity characteristics in visible wavelengths of 380 to 780 nm and generates six video signals captured with the respective spectral sensitivities.

The illumination sensor 6 is disposed near the subject 8. The sensor 6 measures an illumination spectrum of the shooting light source 7 irradiating the subject 8 at a time sampling equivalent to the shooting time of the six-band camera 1 and then generates 401 measurement spectral data, obtained at intervals of 1 nm in the range of 380 to 780 nm, to output to the video converter 2.

The microphone 5 is arranged near the subject 8. The microphone 5 captures sounds generated near the subject 8 and outputs the sounds as audio data to the video converter 2.

The video converter 2 receives respectively video data from the six-band camera 1, shooting illumination spectral data from the illumination sensor 6, and audio data from the microphone 5. The video converter 2 converts the input video data into display-signal video data to be displayed as faithful colors through the six-primary-color display 3 and then outputs the data in a predetermined format including the audio data to the six-primary-color display 3.

The six-primary-color display 3 projects the display-signal video data constituting color signals supplied from the video converter 2 onto the screen 4 to visibly display images, and also generates sounds by means of a speaker built therein synchronously with the image display.

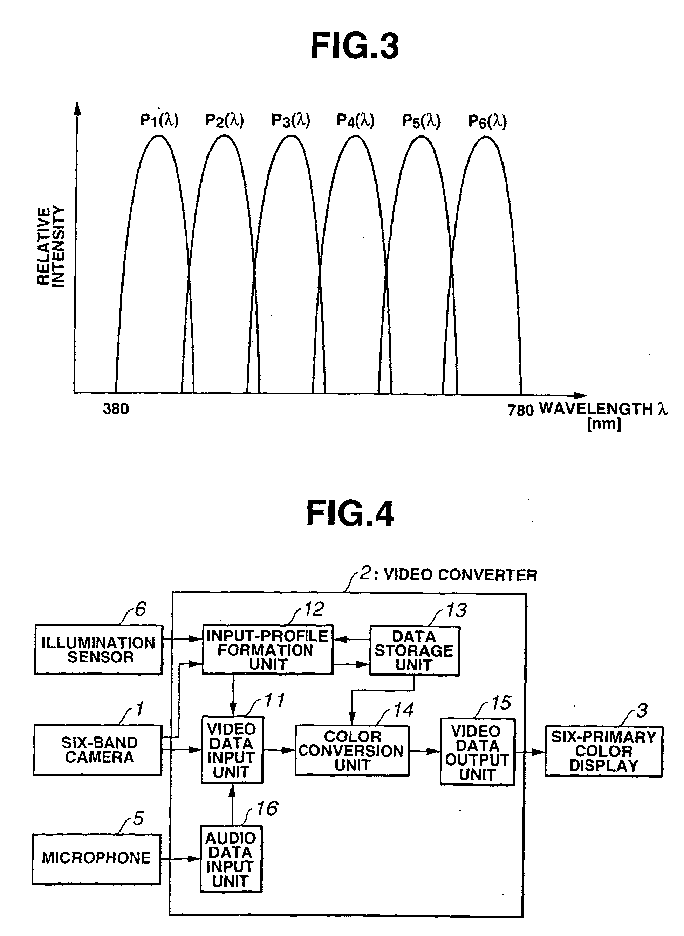

Fig. 3 is a diagram of an emission spectrum comprising six primary colors of the six-primary-color display 3.

Referring to Fig. 3, the six-primary-color display 3 outputs and displays light comprising six independent emission spectrum components $p_1(\lambda)$, $p_2(\lambda)$, $p_3(\lambda)$, $p_4(\lambda)$, $p_5(\lambda)$, and $p_6(\lambda)$ in the visible wavelengths of 380 to 780 nm.

Fig. 4 is a block diagram of the structure of the video converter 2.

The video converter 2 comprises a video data input unit 11, an input-profile formation unit 12, a data storage unit 13, a color conversion unit 14, a video data output unit 15, and an audio data input unit 16.

The input-profile formation unit 12 receives shooting setting information from the six-band camera 1 and also receives shooting illumination spectral data from the illumination sensor 6 synchronously with the reception of the shooting setting information. The input profile formation unit 12 further receives shooting characteristics data from the data storage unit 13.

The shooting setting information indicates information related to the setting of the six-band camera 1 upon shooting every frame of video data. This information includes a lens aperture, a focal point, and exposure time.

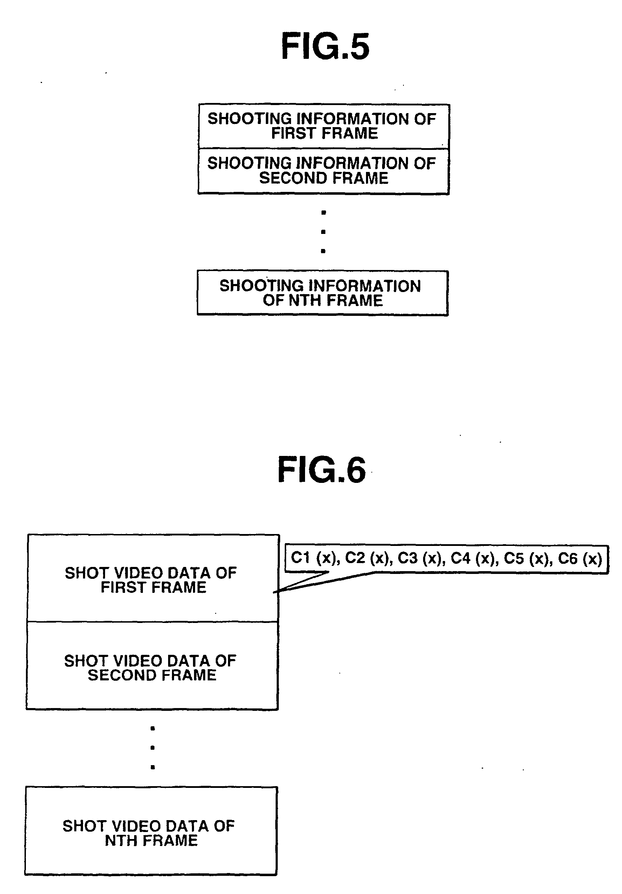

Fig. 5 is a diagram showing the arrangement of shooting setting information.

As shown in Fig. 5, shooting setting information is recorded every frame so as to relate to the corresponding frame of video data.

The shooting characteristics data comprises the spectral sensitivity of the six-band camera 1 in standard setting, tone-scale characteristics, statistical data of the spectral reflectance of the subject.

The input-profile formation unit 12 forms an input profile constituting a color reproduction characteristic from these data and then outputs the formed input profile to the video data input unit 11 or the data storage unit 13. To which of the video data input unit 11 and the data storage unit 13 the input profile is output is determined in the video data input unit 11 depending on user setting in the video converter 2.

The data storage unit 13 outputs shooting characteristics data to the input-profile formation unit 12. In case of need, the data storage unit 13 also receives the input profile formed by the input-profile formation unit 12 to store the input profile therein. Further, the data storage unit 13 outputs the recorded input profile, and a color-space conversion profile and an output profile, which are previously stored, to the color conversion unit 14.

The video data input unit 11 receives video data from the six-band camera 1 and audio data from the audio data input unit 16 respectively. In case of need, the video data input unit 11 also receives the input profile from the input-profile formation unit 12, converts the video data into data in a predetermined format, and then outputs the resultant data to the color conversion unit 14.

As mentioned above, on the basis of the user setting in the video converter 2, the video data input unit 11 determines whether the video data input unit 11 receives the input profile.

Fig. 6 is a diagram showing the arrangement of video data.

Referring to Fig. 6, video data supplied from the six-band camera 1 is recorded every frame. In each video data, signal values $C1(x)$, $C2(x)$, $C3(x)$, $C4(x)$, $C5(x)$, and $C6(x)$ of six bands are recorded in that order every pixel shown by "x".

The color conversion unit 14 converts the video data, supplied from the video data input unit 11, in the predetermined format into display-signal video data comprising signal values for the six-primary-color display using the input profile, the color-space conversion profile, and the output profile, and then outputs the resultant data to the video data output unit 15.

If the video data, supplied from the video data input unit 11, includes an input profile, the color conversion unit 14 uses the input profile included in the video data. On the other hand, if the video data does not include any input profile, an input profile is supplied from the data storage unit 13 to the color conversion unit 14 and is then used.

The video data output unit 15 receives the display-signal video data from the color conversion unit 14 and then outputs the six-primary-color display 3.

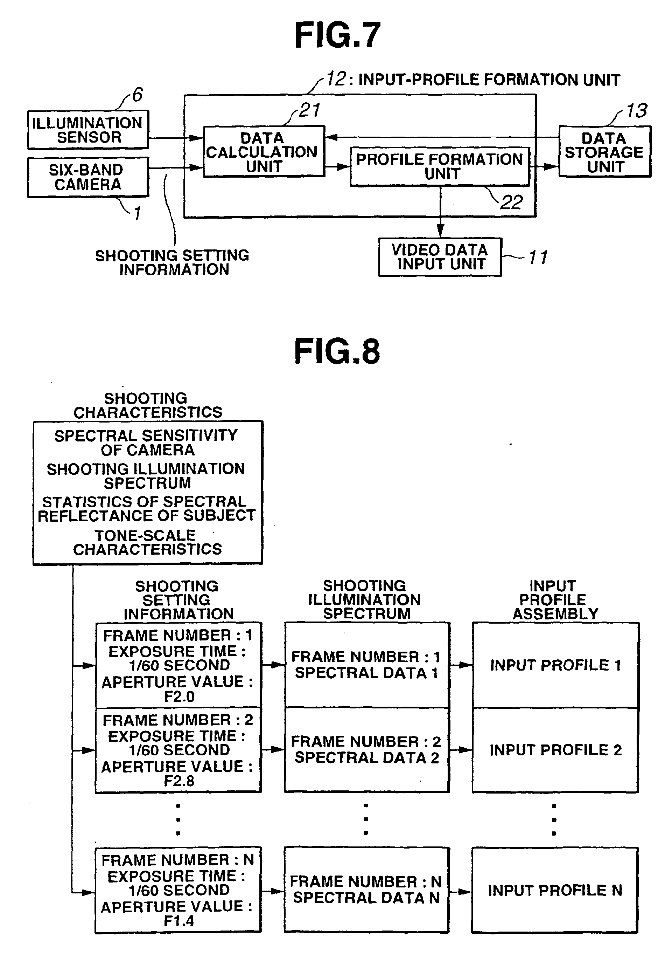

Fig. 7 is a block diagram showing the structure of the input-profile formation unit 12.

The input-profile formation unit 12 comprises a data calculation unit 21 and a profile formation unit 22.

The data calculation unit 21 receives shooting characteristics data from the data storage unit 13 and also receives a shooting illumination spectrum from the illumination sensor 6 and shooting setting information from the six-band camera 1 respectively every frame to calculate a spectral-reflectance estimation matrix used for calculating the spectral reflectance of the subject.

Means for calculating a spectral-reflectance estimation matrix from the spectral sensitivity of a camera, a shooting illumination spectrum, and statistical data of the spectral reflectance of a subject is disclosed in "SEIKAKUNA IROSAIGEN GA KANOUNA KARAH GAZOU SISUTEMU NO KAIHATSU (Development of Color Image System Capable of Faithfully Reproducing Colors)", Yuri Murakami et al., Proceedings of COLOR FORUM JAPAN '99, pp. 5 - 8 [Document 2]. Accordingly, the explanation of that means is omitted.

The spectral sensitivity of the camera for each frame is calculated on the basis of the spectral sensitivity of the six-band camera 1 in standard setting, the spectral sensitivity being included in the shooting characteristics data supplied from the data storage unit 13, and a lens aperture and exposure time included in the shooting setting information supplied from the six-band camera 1.

The obtained spectral-reflectance estimation matrix, the shooting setting information, and the shooting characteristics data are supplied to the profile formation unit 22.

The profile formation unit 22 forms an input profile in the predetermined format on the basis of the spectral-reflectance estimation matrix, the shooting setting information, and the shooting characteristics data supplied from the data calculation unit 21, and then outputs the formed input profile to the video data input unit 11 or the data storage unit 13.

Fig. 8 is a diagram showing the concept of an input profile forming process in the input-profile formation unit 12.

Shooting characteristics data is shared by all frames. Shooting setting information and a shooting illumination spectrum are different every frame. As mentioned above, the shooting characteristics data includes the spectral sensitivity of the camera, a shooting illumination spectrum, statistical data of the spectral reflectance of the subject, and tone-scale characteristics. The shooting setting information includes exposure time and an aperture value, which correspond to a frame number. Further, the shooting illumination spectrum includes spectral data corresponding to a frame number.

An input profile corresponding to a first frame is calculated on the basis of shooting characteristics data, shooting setting information (in the diagram, exposure time: 1/60 second and aperture value: 2.0) corresponding to the first frame, and a shooting illumination spectrum (in the diagram, spectral data 1). Subsequently, an input profile corresponding to a second frame is calculated on the basis of the shooting characteristics data, shooting setting information (in the diagram, exposure time: 1/60 second and aperture scale: 2.8) corresponding to the second frame, and a shooting illumination spectrum (in the diagram, spectral data 2). The above process is performed with respect to frames up to the Nth frame.

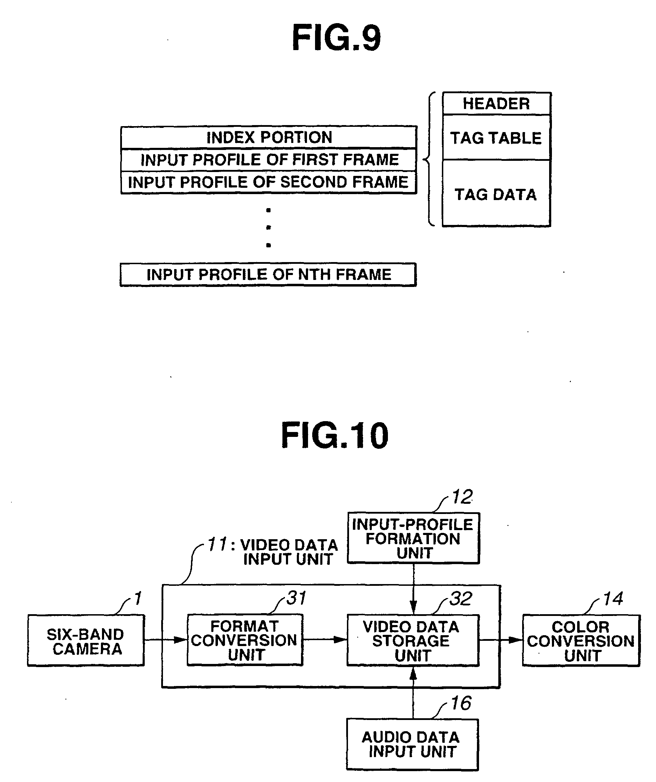

Fig. 9 is a diagram showing the structure of each input profile assembly.

As shown in Fig. 9, input profile assembly includes input profiles, formed as mentioned above, corresponding to N frames. The input profile assembly comprises: an index portion in which the frame numbers corresponding to the input profiles and information such as addresses of the respective profiles corresponding to the frames are recorded; and the input profiles corresponding to the respective frames.

The input profiles, corresponding to the respective frames, each comprise a header, a tag table, and tag data in a manner similar to the ICC profile disclosed in the foregoing document 1.

Fig. 10 is a block diagram showing the structure of the video data input unit 11.

The video data input unit 11 comprises a format conversion unit 31 and a video data storage unit 32.

The format conversion unit 31 converts video data supplied from the six-band camera 1 into data in the predetermined format and then outputs the resultant data to the video data storage unit 32.

The video data storage unit 32 combines an image, sounds, and the input profile assembly on the basis of the video data in the predetermined format supplied from the format conversion unit 31, the audio data supplied from the audio data input unit 16, and the input profile assembly supplied from the input-profile formation unit 12 according to the user setting, stores the resultant data as data in the predetermined format, and then outputs the data to the color conversion unit 14.

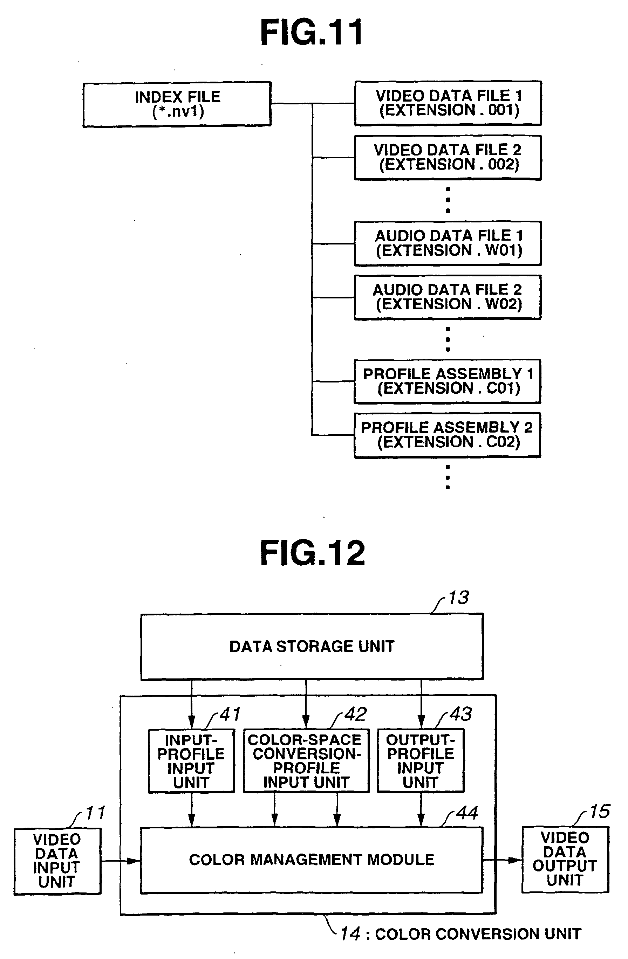

Fig. 11 is a diagram conceptually showing the format of data stored in the video data storage unit 32.

In an example shown in Fig. 11, video data, audio data, and input profile assemblies are independent files each including data corresponding to arbitrary number of frames. These files are managed using an index file.

In other words, addresses of video data, audio data, and input profiles corresponding to the respective frames are recorded in the index file. Video data, audio data, and input profile data corresponding to an arbitrary frame can be accessed with reference to the index file.

As shown in Fig. 11, it is determined that each video data file, each audio data file, and each input profile assembly have respective predetermined extensions.

The format of the video data, audio data, and input profile assembly is not limited to the above-mentioned format having a plurality of files.

Fig. 12 is a block diagram showing the structure of the color conversion unit 14.

The color conversion unit 14 comprises an input-profile input unit 41, a color-space conversion-profile input unit 42, an output-profile input unit 43, and a color management module 44 constituting color converting means.

The input-profile input unit 41, the color-space conversion-profile input unit 42, and the output-profile input unit 43 receive an input profile, a color-space conversion profile, and an output profile from the data storage unit 13, respectively, those profiles being designated by the user setting. Then, the respective units output the profiles to the color management module 44.

The color management module 44 converts video data supplied from the video data input unit 11 into display-signal video data for the six-primary-color display 3 using the above profile data and then outputs the resultant data to the video data output unit 15. If the video data includes an input profile, however, any input profile is not supplied from the input-profile input unit 41 and the input profile included in the video data is used.

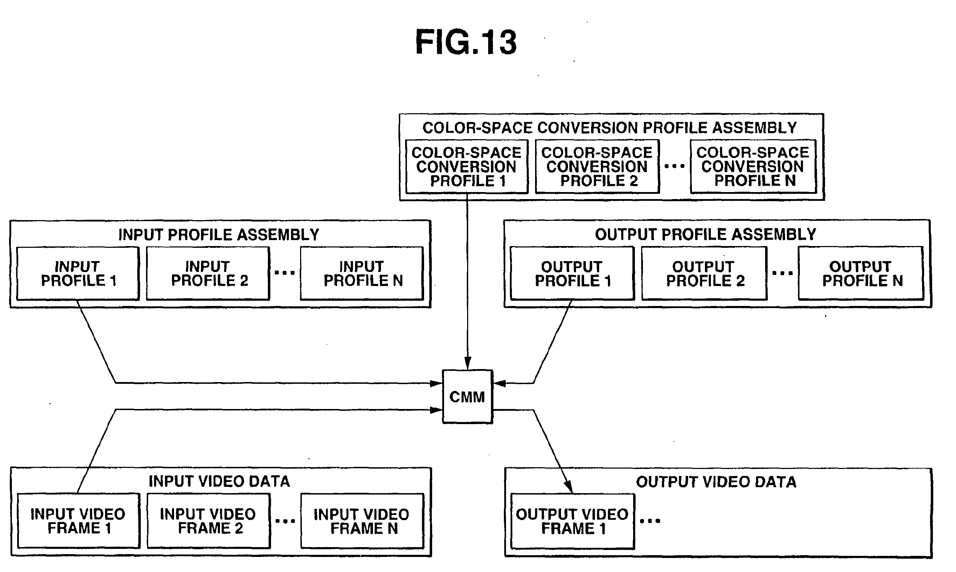

Fig. 13 is a diagram conceptually showing a color converting process in the color conversion unit 14.

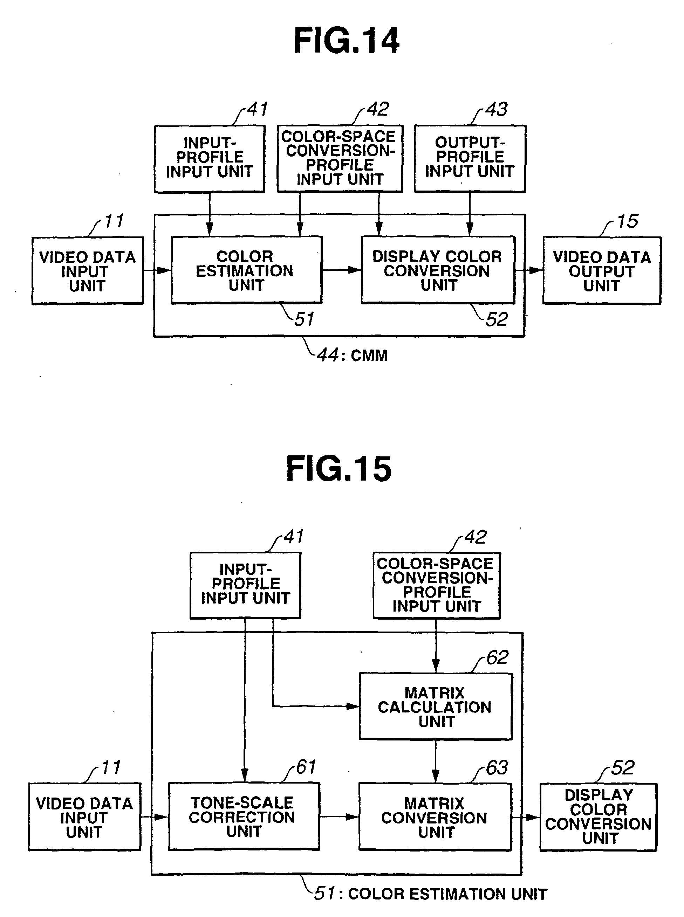

The color management module 44 (abbreviated to a CMM in Figs. 13 and 14) receives input video data, an input profile, a color-space conversion profile, and an output profile, which respectively correspond to the first frame, to calculate output video data of the first frame, and then outputs the obtained data.

Subsequently, the color management module 44 receives input video data, an input profile, a color-space conversion profile, and an output profile, which respectively correspond to the second frame, to calculate output video data of the second frame, and then outputs the obtained data.

The color management module 44 sequentially performs the above process N times corresponding to the N frames.

Fig. 14 is a block diagram showing the structure of the color management module 44.

The color management module 44 comprises a color estimation unit 51 and a display color conversion unit 52.

The color estimation unit 51 converts the video data supplied from the video data input unit 11 into colorimetric-value video data using the input profile supplied from the input-profile input unit 41 and the color-space conversion profile supplied from the color-space conversion-profile input unit 42, and then outputs the resultant data to the display color conversion unit 52.

The display color conversion unit 52 converts the colorimetric-value video data supplied from the color estimation unit 51 into display-signal video data using the color-space conversion profile supplied from the color-space conversion-profile input unit 42 and the output profile supplied from the output-profile input unit 43, and then outputs the resultant data to the video data output unit 15.

Fig. 15 is a block diagram showing the structure of the color estimation unit 51.

The color estimation unit 51 comprises a tone-scale correction unit 61, a matrix calculation unit 62, and a matrix conversion unit 63.

The tone-scale correction unit 61 receives tone-scale characteristics data from the input-profile input unit 41. On the basis of this data, the tone-scale correction unit 61 corrects the tone scale of the video data, supplied from the video data input unit 11, such that the video data has a linear signal value with respect to light intensity, and then outputs the resultant data to the matrix conversion unit 63.

The matrix calculation unit 62 calculates a colorimetric-value estimation matrix using the spectral-reflectance estimation matrix supplied from the input-profile input unit 41 and the color-space conversion profile supplied from the color-space conversion-profile input unit 42.

The color-space conversion profile includes a rendering illumination spectrum constituting an observation illumination spectrum to specify a reflection spectrum with respect to the spectral reflectance, and a color matching function.

A colorimetric-value estimation matrix $A_{ji}$ (j = 1 to L, i = 1 to 6) is calculated using a spectral-reflectance estimation matrix $B_{ki}$ (k = 1 to 401, i = 1 to 6), a rendering illumination spectrum $S_k$ (k = 1 to 401), and a color matching function $T_{jk}$ (j = 1 to L, k = 1 to 401) by the following expression 1.

**[Expression 1]**

$$\begin{pmatrix} A_{11}A_{12}\cdots A_{16} \\ A_{21}A_{22}\cdots A_{26} \\ \vdots \quad \vdots \quad \ddots \quad \vdots \\ A_{L1}A_{L2}\cdots A_{L6} \end{pmatrix} = \begin{pmatrix} T_{11}T_{12}\cdots T_{1401} \\ T_{21}T_{22}\cdots T_{2401} \\ \vdots \quad \vdots \quad \ddots \quad \vdots \\ T_{L1}T_{L2}\cdots T_{L401} \end{pmatrix}\begin{pmatrix} S_1 & 0\cdots 0 \\ 0 & S_2\cdots 0 \\ \vdots & \vdots \ddots \vdots \\ 0 & \cdots 0\, S_{401} \end{pmatrix}\begin{pmatrix} B_{11} & B_{12} & \cdots & B_{16} \\ B_{21} & B_{22} & \cdots & B_{26} \\ \vdots & \vdots & \ddots & \vdots \\ B_{4011} & B_{4012} & \cdots & B_{4016} \end{pmatrix}$$

Where, a number L of the color matching function is an arbitrary number. When the CIE1931 color matching function or the CIE1964 color matching function is used, L = 3.

The number of wavelength dimensions of 401, related to the spectral reflectance, the rendering illumination spectrum, and the color matching function, corresponds to a sampling wavelength obtained at intervals of 1 nm in the wavelengths of 380 to 780 nm.

The matrix conversion unit 63 receives the colorimetric-value estimation matrix calculated by the matrix calculation unit 62, multiplies six-band video data subjected to the tone-scale correction and supplied from the tone-scale correction unit 61 by the received colorimetric-value estimation matrix, and then outputs the obtained values to the display color conversion unit 52.

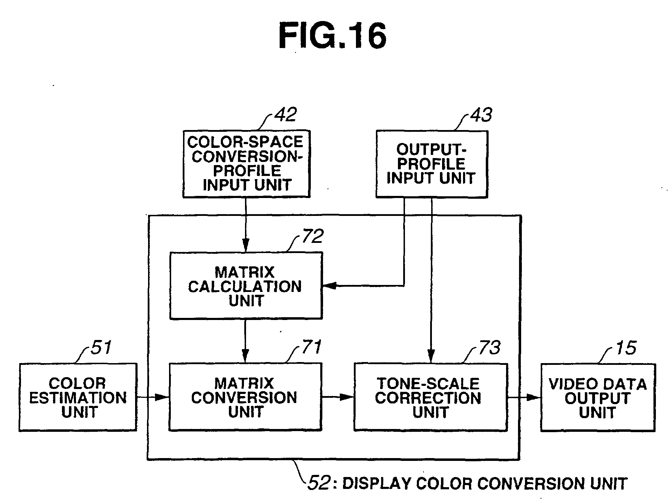

Fig. 16 is a block diagram showing the structure of the display color conversion unit 52.

The display color conversion unit 52 comprises a matrix calculation unit 72, a matrix conversion unit 71, and a tone-scale correction unit 73.

The matrix calculation unit 72 calculates a colorimetric value $P_{ji}$ (j = 1 to L, i = 1 to 6) in the maximum emission of each primary color of the six-primary-color display 3, using the following expression 2 on the basis of the color matching function $T_{jk}$ (j = 1 to L, k = 1 to 401) included in the color-space conversion profile supplied from the color-space conversion-profile input unit 42 and a spectrum pik (i = 1 to 6, k = 1 to 401) in the maximum emission of each primary color of the six-primary-color display 3, the spectrum being included in the output profile constituting a color reproduction characteristic supplied from the output-profile input unit 43. The matrix calculation unit 72 then outputs the obtained value to the matrix conversion unit 71.

**[Expression 2]**

$$P_{ji} = \sum_{k=1}^{401} T_{jk} P_{ik}$$

The matrix conversion unit 71 converts the colorimetric value supplied from the color estimation unit 51 into a display signal for the six-primary-color display 3 on the basis of the colorimetric value at the maximum emission of each primary color of the six-primary-color display 3, the colorimetric value being supplied from the matrix calculation unit 72. The matrix conversion unit 71 then outputs the obtained signal to the tone-scale correction unit 73.

Means for converting a colorimetric value into a signal value of a multiprimary display is disclosed in "Color Conversion Method for Multiprimary Display Using Matrix Switching", T. Ajito et al., Optical Review, Vol. 8, No. 3, 2001, pp. 191 to 197 [Document 3]. Accordingly, the description related to the converting means is omitted here.

The tone-scale correction unit 73 performs tone-scale correction to the display signal supplied from the matrix conversion unit 71 using tone-scale characteristics data for the six-primary-color display 3 supplied from the output-profile input unit 43, and then outputs the resultant signal to the video data output unit 15.

According to the first embodiment, the present system provides profiles corresponding to respective frames constituting video data, thus realizing faithful color reproduction in an open system. Consequently, even if input and output color characteristics change every frame, the present system can support the change.

For the input profile, even if the lens aperture of a camera, exposure time, a shooting illumination spectrum, and statistics of the spectral reflectance of a subject change every frame, the input profile can support the change.

For the output profile, the reproduction can be achieved in consideration of a fluctuation in characteristics of a display or a change in adaptability thereof. Further, a rendering illumination spectrum can be made varied every frame.

Data such as the spectral sensitivity of color video input means, a shooting illumination spectrum, and statistical information of the spectral reflectance of a subject are used as components of the input profile. Data such as an output spectrum of color video output means, tone-scale characteristics, an observation illumination spectrum, and a color matching function are used as components of the output profile. Thus, faithful color reproduction can be realized.

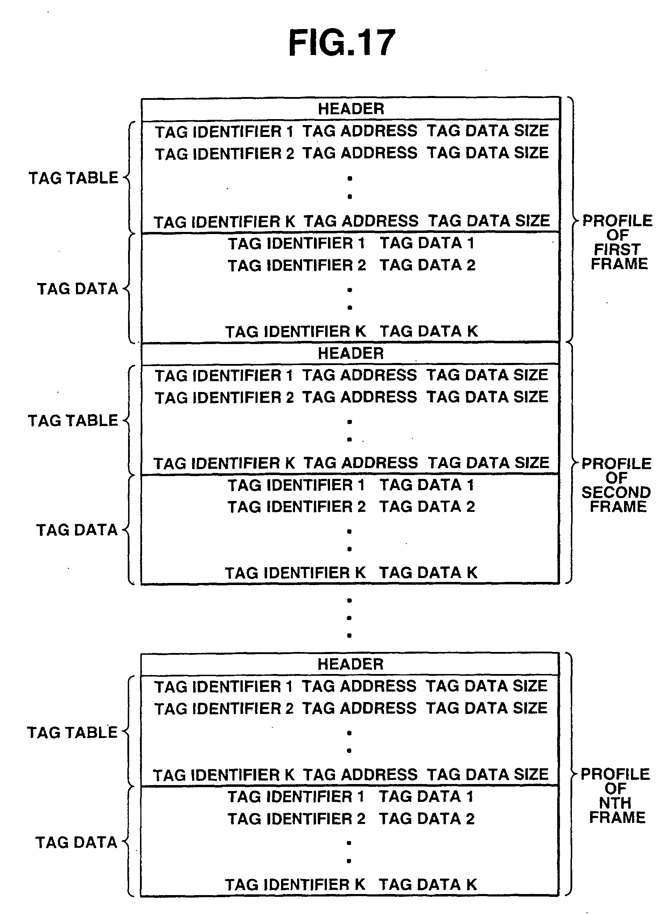

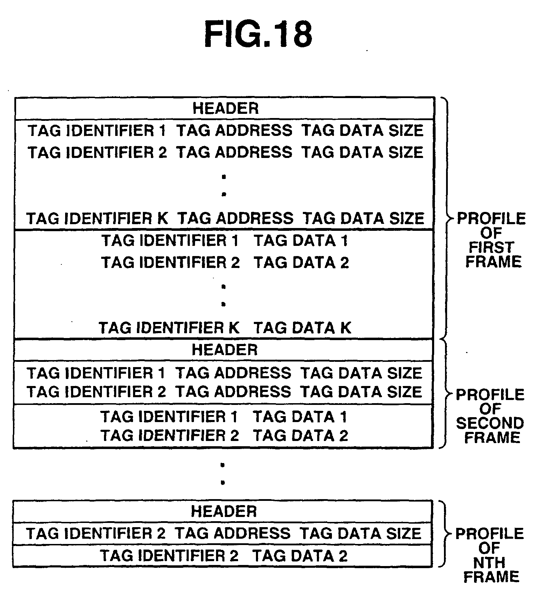

Fig. 18 relates to a second embodiment of the present invention and illustrates the arrangement of profile data in a color image reproduction system according to the second embodiment. Fig. 17 is a diagram showing the arrangement of profile data in the color image reproduction system according to the foregoing first embodiment. The arrangement in Fig. 18 will now be described as compared with that in Fig. 17. In the second embodiment, the description regarding the same portions as those in the above-mentioned first embodiment is omitted. The difference between the first and second embodiments will now be described mainly.

The arrangement and components excluding profile data of the color image reproduction system according to the second embodiment are the same as those of the color image reproduction system according to the foregoing first embodiment. Accordingly, the drawings and reference numerals related to the first embodiment will be used in case of need.

A profile assembly according to the second embodiment will now be described with reference to Fig. 18.

First, a profile assembly shown in Fig. 17 is the same construction as that used in the color image reproduction system according to the foregoing first embodiment. Each profile, corresponding to a frame, comprises a header, a tag table, and tag data. The tag table relating to all of tag data (K data) and all of tag data are written every frame.

On the other hand, a profile assembly shown in Fig. 18 is used in the color image reproduction system according to the second embodiment. Wherein, the same data as profile data corresponding to the preceding frame is not written.

In other words, in the example shown in Fig. 18, a profile corresponding to a first frame includes all of data. Except for first data indicated by a tag identifier 1 and second data indicated by a tag identifier 2, other data included in a profile corresponding to a second frame is the same as that of the profile of the first frame. Therefore, the other data is not written in the profile of the second frame. As mentioned above, only data different from that of the preceding frame is written in each of profiles corresponding to the second and subsequent frames.

After that, writing the same data as that of the preceding frame is omitted in a manner similar to the above.

In the color conversion unit 14 shown in Fig. 12, using profiles having the above-mentioned data structures, the input-profile input unit 41 stores data written in an input profile into a memory built therein, the color-space conversion-profile input unit 42 stores data written in a color-space profile into a memory built therein, and the output-profile input unit 43 stores data written in an output profile into a memory built therein, the input profile, the color-space profile, and the output profile being supplied from the data storage unit 13. When receiving profile data corresponding to the next frame, each unit overwrites data in the same memory therein.

Data described in a profile is written over data stored in each memory. Data, which is not written in the profile, is stored such that data written in a profile corresponding to the preceding frame is remained as is. Consequently, the color management module 44 accurately obtains profile data corresponding to the frame to be processed.

According to the second embodiment, the same advantages as those of the foregoing first embodiment are produced. Additionally, if the same information is included in profiles corresponding to respective frames, the amount of information necessary for profile description can be reduced. When a profile is not changed every frame, necessary information can be recorded with the small amount of information in a format compatible with a case where a profile is changed every frame.

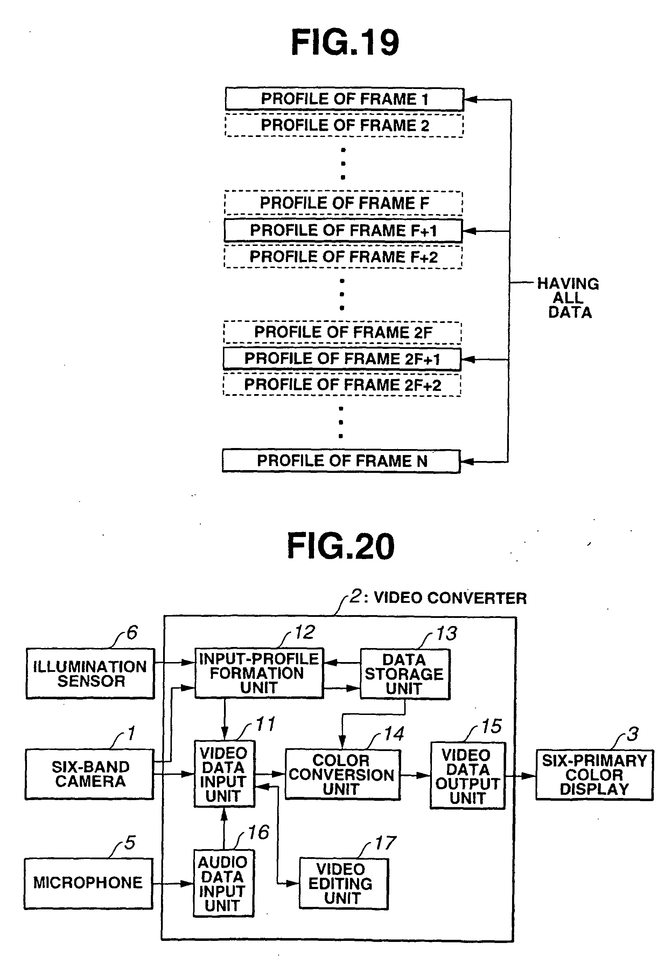

Figs. 19 to 21 relate to a third embodiment of the present invention. Fig. 19 is a diagram showing the arrangement of profile data in a color image reproduction system according to the third embodiment. In the third embodiment, the description regarding the same portions as those in the first and second embodiments is omitted. The difference between the third embodiment and the first and second embodiments will now be described mainly. In the third embodiment, the drawings and reference numerals related to the first embodiment will also be used in case of need.

In the color image reproduction system according to the third embodiment, the same data as profile data of the preceding frame is not written in the same way as the color image reproduction system of the foregoing second embodiment. The third embodiment differs from the second embodiment in the following way: Irrespective of whether data is the same as that of the preceding frame, all of profile data is written every at least predetermined number of frames F (F denotes a positive integer).

In other words, according to the third embodiment, as shown in Fig. 19, a profile corresponding to a first frame includes all of data. Profiles located at intervals of F frames, namely, profiles corresponding to a frame F+1, a frame 2F+1, a frame 3F+1, ... have all of data. For the last frame N, if $N = n \times F + 1$ (n denotes an integer of zero or larger), a profile corresponding to the last frame N has all data as shown in the diagram. If NO, that profile does not have to include all data.

Profiles are designed so as to have the above-mentioned data structure. Accordingly, when profile data corresponding to arbitrary successive F frames is extracted, a profile data having all data exists among the data.

The number of frames F can be set by the user in the input-profile formation unit 12.

Fig. 20 is a block diagram showing the structure of the video converter 2.

The third embodiment differs from the first embodiment in the following way: The video converter 2 includes a video edition unit 17.

The video edition unit 17 receives video data stored in the video data input unit 11 and then edits, for example, cuts and connects the data. After that, the video edition unit 17 outputs the resultant data to the video data input unit 11.

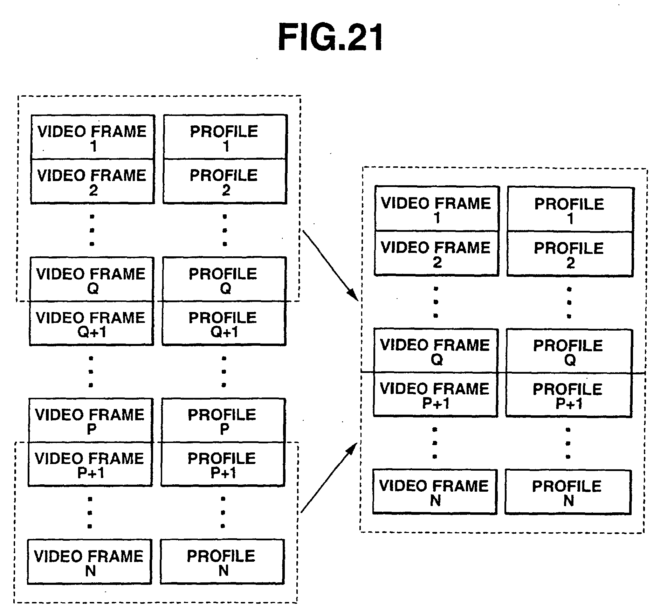

Fig. 21 is a diagram showing the concept of a video editing process in the video edition unit 17.

For the editing process, Fig. 21 illustrates a case where the middle portion of video data comprising 1 to N frames is cut and the former portion and the latter portion thereof are then connected to each other.

In other words, in video data comprising 1 to N frames and profile data corresponding to the respective frames, video data comprising 1 to Q frames and profile data corresponding to those frames are connected to video data comprising (P+1) to N frames and profile data corresponding to those frames as shown in Fig. 21. The resultant data is output as edited video data.

At that time, for video data and profile data, the address and size of desired data are obtained by referring to an index file and the desired data is copied to form new data to be edited.

In the above profile editing process, reproduction of profile data corresponding to some frames after the (P+1) th frame may be impossible.

In other words, only data different from profile data corresponding to the Pth frame is originally written in the profile corresponding to the (P+1)th frame. Generally, the data included in the profile corresponding to the (P+1)th frame does not coincide with that in the profile corresponding to the Qth frame, which serves as a frame just before the (P+1)th frame after editing.

Therefore, except that the profile corresponding to the (P+1)th frame accidentally includes all of data, it is impossible to reproduce all of data in profiles corresponding to frames from the (P+1)th frame to a frame just before the frame which corresponds to the next profile including all data.

In order to reproduce that data, it is necessary to rewrite profiles. According to the simplest means for accomplishing the reproduction, the profile corresponding to the (P+1)th frame is allowed to include all data.

In the arrangement of profiles shown in Fig. 19, the following is guaranteed: All of profile data corresponding to the (P+1)th frame is written in profile data corresponding to the (P+2-F)th to (P+1)th frames. The reason is that a profile having all data is certainly included among F profiles corresponding to successive F frames as mentioned above. Therefore, profile data corresponding to the (P+2-F)th frame to profile data corresponding to the (P+1)th frame is sequentially read and the data is overwritten and stored. Data finally obtained in that manner serves as all of data included in the profile corresponding to the (P+1)th frame.

In order to obtain a profile which corresponds to the (P+1)th frame and has all of data, it is necessary and enough to read profile data ranging from profile data including all of data and corresponding to a frame of which number is lower than (P+1) and is the closest to (P+1), to profile data corresponding to the (P+1)th frame.

As shown in Fig. 19, therefore, when profile data each including all data is arranged every F frames, namely, at regular intervals of F frames, it is enough to sequentially read profile data corresponding to the $([P/F]\times F+1)$th to (P+1)th frames. Gauss' notation "$\times$" denotes the maximum integer which does not exceed $\times$.

Alternatively, the following way can also be used: A flag to determine whether profile data includes all of data is given to each profile data for each frame. Flags are sequentially checked in reverse order from the profile data corresponding to the (P+1)th frame. Then, profile data including profile data, which is first found as profile data including all of data, to profile data corresponding to the (P+1)th frame is read.

Profile data including all data obtained by any of the above-mentioned means is stored as the (P+1)th profile data. Consequently, in edited video data as shown in Fig. 21, necessary profile data can be obtained.

Complete periodicity of profiles, each including all of data, located every F frame does not hold in edited video data. However, the following is guaranteed in edited video data: When F profile data corresponding to arbitrary successive F frames is extracted, profile data including all of data always exists among the F profile data.

According to the third embodiment, the same advantages as those of the foregoing first and second embodiments are. produced. In addition, profiles corresponding to successive frames, of which number is predetermined, include all of data. Consequently, if a profile format in which duplicate description of the same data is eliminated is used, video data can be relatively easily edited.

The present invention is not limited to the above-mentioned embodiments but many modifications and variations are possible within the spirit and scope of the invention.

Industrial Applicability

As mentioned above, according to the color image reproduction system of the present invention, faithful color reproduction of video data comprising frames can be achieved.

**Claims**

**1.** A color image reproduction system comprising:

color video input means;
color video output means; and
color conversion means for converting a color signal of the color video input means into a color signal of the color video output means using color reproduction characteristics of the color video input means and those of the color video output means, wherein
the color reproduction characteristics of the color video input means and those of the color video output means each comprises color reproduction characteristics corresponding to respective frames of an image.

2. The color image reproduction system according to Claim 1, wherein the color reproduction characteristics corresponding to respective frames are formed such that when at least one part of information to be described in each color reproduction characteristic corresponding to one frame is the same as information described in the color reproduction characteristic corresponding to the preceding frame, the description of the information is omissible.

3. The color image reproduction system according to Claim 2, wherein the color reproduction characteristic is formed such that when successive predetermined number of frames are arbitrarily selected, all of information to be described in the color reproduction characteristic is written in at least one of the color reproduction characteristics corresponding to the selected frames.

4. The color image reproduction system according to Claim 1, 2, or 3, wherein the color reproduction characteristic of the color video input means includes at least one of the spectral sensitivity of the color video input means, a shooting illumination spectrum, and statistical information of the spectral reflectance of a subject.

5. The color image reproduction system according to Claim 1, 2, or 3, wherein the color reproduction characteristic of the color video output means includes at least one of an output spectrum of the color video output means, tone-scale characteristics, an observation illumination spectrum, and a color matching function.

# FIG.1

7 : SHOOTING ILLUMINATION

8 : SUBJECT

5 : MICROPHONE

6 : ILLUMINATION SENSOR

1 : SIX-BAND CAMERA

2

VIDEO CONVERTER

4 : SCREEN

3 : SIX-PRIMARY -COLOR DISPLAY

# FIG.2

RELATIVE SPECTRAL SENSITIVITY

380  430  480  530  580  630  680  730  780

WAVELENGTH λ [nm]

# FIG.3

# FIG.4

# FIG.5

| |
|---|
| SHOOTING INFORMATION OF FIRST FRAME |
| SHOOTING INFORMATION OF SECOND FRAME |

.
.
.

| |
|---|
| SHOOTING INFORMATION OF NTH FRAME |

# FIG.6

| | |
|---|---|
| SHOT VIDEO DATA OF FIRST FRAME | C1 (x), C2 (x), C3 (x), C4 (x), C5 (x), C6 (x) |
| SHOT VIDEO DATA OF SECOND FRAME | |

.
.
.

| |
|---|
| SHOT VIDEO DATA OF NTH FRAME |

# FIG.7

# FIG.8

# FIG.9

| INDEX PORTION |
|---|
| INPUT PROFILE OF FIRST FRAME |
| INPUT PROFILE OF SECOND FRAME |

.
.
.

| INPUT PROFILE OF NTH FRAME |

| HEADER |
|---|
| TAG TABLE |
| TAG DATA |

# FIG.10

12

INPUT-PROFILE FORMATION UNIT

11 : VIDEO DATA INPUT UNIT

1

SIX-BAND CAMERA

31

FORMAT CONVERSION UNIT

32

VIDEO DATA STORAGE UNIT

14

COLOR CONVERSION UNIT

16

AUDIO DATA INPUT UNIT

# FIG.11

```
┌─────────────────┐        ┌──────────────────────┐
│   INDEX FILE    │────────│  VIDEO DATA FILE 1   │
│    (*.nv1)      │   │    │  (EXTENSION . 001)   │
└─────────────────┘   │    └──────────────────────┘
                      │    ┌──────────────────────┐
                      │────│  VIDEO DATA FILE 2   │
                      │    │  (EXTENSION . 002)   │
                      │    └──────────────────────┘
                      │              ⋮
                      │    ┌──────────────────────┐
                      │────│  AUDIO DATA FILE 1   │
                      │    │  (EXTENSION . W01)   │
                      │    └──────────────────────┘
                      │    ┌──────────────────────┐
                      │────│  AUDIO DATA FILE 2   │
                      │    │  (EXTENSION . W02)   │
                      │    └──────────────────────┘
                      │              ⋮
                      │    ┌──────────────────────┐
                      │────│  PROFILE ASSEMBLY 1  │
                      │    │  (EXTENSION . C01)   │
                      │    └──────────────────────┘
                      │    ┌──────────────────────┐
                      │────│  PROFILE ASSEMBLY 2  │
                           │  (EXTENSION . C02)   │
                           └──────────────────────┘
                                     ⋮
```

# FIG.12

```
                          ┌────────────────────────────────────────┐ ⌐13
                          │          DATA STORAGE UNIT             │
                          └────────────────────────────────────────┘
                              │            │    │          │
                              ▼            ▼    │          ▼
                     ┌──────────┐ ⌐41 ┌──────────┐⌐42 ┌──────────┐⌐43
                     │  INPUT-  │     │COLOR-SPACE│    │ OUTPUT-  │
                     │ PROFILE  │     │CONVERSION-│    │ PROFILE  │
                     │  INPUT   │     │  PROFILE  │    │  INPUT   │
                     │  UNIT    │     │INPUT UNIT │    │  UNIT    │
                     └──────────┘     └──────────┘    └──────────┘
                          │            │       │          │
  ⌐11                     ▼            ▼       ▼          ▼        ⌐44        ⌐15
┌────────┐          ┌──────────────────────────────────────────────┐    ┌────────┐
│ VIDEO  │          │                                              │    │ VIDEO  │
│ DATA   │─────────▶│         COLOR MANAGEMENT MODULE              │───▶│ DATA   │
│ INPUT  │          │                                              │    │ OUTPUT │
│ UNIT   │          └──────────────────────────────────────────────┘    │ UNIT   │
└────────┘                                                               └────────┘
                            └ 14 : COLOR CONVERSION UNIT
```

# FIG.13

EP 1 447 994 A1

**COLOR-SPACE CONVERSION PROFILE ASSEMBLY**

| COLOR-SPACE CONVERSION PROFILE 1 | COLOR-SPACE CONVERSION PROFILE 2 | ... | COLOR-SPACE CONVERSION PROFILE N |
|---|---|---|---|

**INPUT PROFILE ASSEMBLY**

| INPUT PROFILE 1 | INPUT PROFILE 2 | ... | INPUT PROFILE N |
|---|---|---|---|

**OUTPUT PROFILE ASSEMBLY**

| OUTPUT PROFILE 1 | OUTPUT PROFILE 2 | ... | OUTPUT PROFILE N |
|---|---|---|---|

CMM

**INPUT VIDEO DATA**

| INPUT VIDEO FRAME 1 | INPUT VIDEO FRAME 2 | ... | INPUT VIDEO FRAME N |
|---|---|---|---|

**OUTPUT VIDEO DATA**

| OUTPUT VIDEO FRAME 1 | ... |
|---|---|

# FIG.14

```
              ╱41              ╱42              ╱43
    ┌──────────┐    ┌──────────────┐    ┌──────────┐
    │  INPUT-  │    │ COLOR-SPACE  │    │ OUTPUT-  │
    │ PROFILE  │    │ CONVERSION-  │    │ PROFILE  │
    │INPUT UNIT│    │  PROFILE     │    │INPUT UNIT│
    │          │    │ INPUT UNIT   │    │          │
    └──────────┘    └──────────────┘    └──────────┘
```

| | | |
|---|---|---|
| | INPUT-PROFILE INPUT UNIT ╱41 | COLOR-SPACE CONVERSION-PROFILE INPUT UNIT ╱42 | OUTPUT-PROFILE INPUT UNIT ╱43 |

```
  ╱11                                                        ╱15
┌──────────┐   ┌────────────────────────────────────┐   ┌──────────┐
│VIDEO DATA│   │ ┌──────────┐      ┌──────────────┐  │   │VIDEO DATA│
│  INPUT   │──▶│ │  COLOR   │─────▶│DISPLAY COLOR │──┼──▶│ OUTPUT   │
│  UNIT    │   │ │ESTIMATION│      │ CONVERSION   │  │   │  UNIT    │
│          │   │ │  UNIT    │      │    UNIT      │  │   │          │
└──────────┘   │ └──────────┘      └──────────────┘  │   └──────────┘
               │      ╲51               ╲52          │
               └────────────────────────────────────┘
                              ╲44 : CMM
```

# FIG.15

```
                    ╱41                       ╱42
         ┌──────────────┐          ┌──────────────┐
         │   INPUT-     │          │ COLOR-SPACE  │
         │  PROFILE     │          │ CONVERSION-  │
         │ INPUT UNIT   │          │  PROFILE     │
         │              │          │ INPUT UNIT   │
         └──────────────┘          └──────────────┘
```

```
   ╱11                                                         ╱52
┌──────────┐                                            ┌──────────┐
│VIDEO DATA│   ┌─────────────┐   ┌─────────────┐        │ DISPLAY  │
│  INPUT   │──▶│ TONE-SCALE  │──▶│   MATRIX    │───────▶│  COLOR   │
│  UNIT    │   │ CORRECTION  │   │ CONVERSION  │        │CONVERSION│
│          │   │   UNIT      │   │   UNIT      │        │  UNIT    │
└──────────┘   └─────────────┘   └─────────────┘        └──────────┘
                     ╱61              ╱63

                                 ┌─────────────┐
                                 │   MATRIX    │
                                 │ CALCULATION │
                                 │   UNIT      │
                                 └─────────────┘
                                       ╱62

                    ╲51 : COLOR ESTIMATION UNIT
```

# FIG.16

```
        ┌─ 42                        ┌─ 43
┌─────────────────┐        ┌─────────────────┐
│  COLOR-SPACE    │        │    OUTPUT-      │
│  CONVERSION-    │        │    PROFILE      │
│    PROFILE      │        │  INPUT UNIT     │
│  INPUT UNIT     │        └─────────────────┘
└─────────────────┘
```

COLOR-SPACE CONVERSION-PROFILE INPUT UNIT — 42

OUTPUT-PROFILE INPUT UNIT — 43

MATRIX CALCULATION UNIT — 72

COLOR ESTIMATION UNIT — 51

MATRIX CONVERSION UNIT — 71

TONE-SCALE CORRECTION UNIT — 73

VIDEO DATA OUTPUT UNIT — 15

52 : DISPLAY COLOR CONVERSION UNIT

# FIG.17

| HEADER | | |
|---|---|---|
| TAG IDENTIFIER 1 | TAG ADDRESS | TAG DATA SIZE |
| TAG IDENTIFIER 2 | TAG ADDRESS | TAG DATA SIZE |
| | • | |
| | • | |
| TAG IDENTIFIER K | TAG ADDRESS | TAG DATA SIZE |

TAG TABLE (first frame)

| TAG IDENTIFIER 1 | TAG DATA 1 |
|---|---|
| TAG IDENTIFIER 2 | TAG DATA 2 |
| • | |
| • | |
| TAG IDENTIFIER K | TAG DATA K |

TAG DATA (first frame)

PROFILE OF FIRST FRAME

| HEADER | | |
|---|---|---|
| TAG IDENTIFIER 1 | TAG ADDRESS | TAG DATA SIZE |
| TAG IDENTIFIER 2 | TAG ADDRESS | TAG DATA SIZE |
| | • | |
| | • | |
| TAG IDENTIFIER K | TAG ADDRESS | TAG DATA SIZE |

TAG TABLE (second frame)

| TAG IDENTIFIER 1 | TAG DATA 1 |
|---|---|
| TAG IDENTIFIER 2 | TAG DATA 2 |
| • | |
| • | |
| TAG IDENTIFIER K | TAG DATA K |

TAG DATA (second frame)

PROFILE OF SECOND FRAME

•
•
•

| HEADER | | |
|---|---|---|
| TAG IDENTIFIER 1 | TAG ADDRESS | TAG DATA SIZE |
| TAG IDENTIFIER 2 | TAG ADDRESS | TAG DATA SIZE |
| | • | |
| | • | |
| TAG IDENTIFIER K | TAG ADDRESS | TAG DATA SIZE |

TAG TABLE (nth frame)

| TAG IDENTIFIER 1 | TAG DATA 1 |
|---|---|
| TAG IDENTIFIER 2 | TAG DATA 2 |
| • | |
| • | |
| TAG IDENTIFIER K | TAG DATA K |

TAG DATA (nth frame)

PROFILE OF NTH FRAME

# FIG.18

| HEADER | |
|---|---|
| TAG IDENTIFIER 1  TAG ADDRESS  TAG DATA SIZE | |
| TAG IDENTIFIER 2  TAG ADDRESS  TAG DATA SIZE | |
| . | |
| . | |
| . | |
| TAG IDENTIFIER K  TAG ADDRESS  TAG DATA SIZE | PROFILE OF FIRST FRAME |
| TAG IDENTIFIER 1   TAG DATA 1 | |
| TAG IDENTIFIER 2   TAG DATA 2 | |
| . | |
| . | |
| . | |
| TAG IDENTIFIER K   TAG DATA K | |
| HEADER | |
| TAG IDENTIFIER 1  TAG ADDRESS  TAG DATA SIZE | |
| TAG IDENTIFIER 2  TAG ADDRESS  TAG DATA SIZE | PROFILE OF SECOND FRAME |
| TAG IDENTIFIER 1   TAG DATA 1 | |
| TAG IDENTIFIER 2   TAG DATA 2 | |

.
.

| HEADER | |
|---|---|
| TAG IDENTIFIER 2  TAG ADDRESS  TAG DATA SIZE | PROFILE OF NTH FRAME |
| TAG IDENTIFIER 2   TAG DATA 2 | |

# FIG.19

| PROFILE OF FRAME 1 |
| PROFILE OF FRAME 2 |

·
·
·

| PROFILE OF FRAME F |
| PROFILE OF FRAME F+1 |
| PROFILE OF FRAME F+2 |

·
·
·

| PROFILE OF FRAME 2F |
| PROFILE OF FRAME 2F+1 |
| PROFILE OF FRAME 2F+2 |

·
·
·

| PROFILE OF FRAME N |

HAVING ALL DATA

# FIG.20

2: VIDEO CONVERTER

6 ILLUMINATION SENSOR

12 INPUT-PROFILE FORMATION UNIT

13 DATA STORAGE UNIT

1 SIX-BAND CAMERA

11 VIDEO DATA INPUT UNIT

14 COLOR CONVERSION UNIT

15 VIDEO DATA OUTPUT UNIT

3 SIX-PRIMARY COLOR DISPLAY

5 MICROPHONE

16 AUDIO DATA INPUT UNIT

17 VIDEO EDITING UNIT

# FIG.21

## INTERNATIONAL SEARCH REPORT

| International application No. |
| --- |
| PCT/JP02/11031 |

**A. CLASSIFICATION OF SUBJECT MATTER**
Int.Cl$^7$ H04N9/64

According to International Patent Classification (IPC) or to both national classification and IPC

**B. FIELDS SEARCHED**

Minimum documentation searched (classification system followed by classification symbols)
Int.Cl$^7$ H04N9/00-9/78

Documentation searched other than minimum documentation to the extent that such documents are included in the fields searched

| | | | |
| --- | --- | --- | --- |
| Jitsuyo Shinan Koho | 1922-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 7-182481 A (NEC Corp.), 21 July, 1995 (21.07.95), Full text (Family: none) | 1-5 |
| Y | JP 2001-8220 A (Olympus Optical Co., Ltd.), 12 January, 2001 (12.01.01), Full text (Family: none) | 1-5 |
| A | JP 2001-245307 A (Matsushita Electric Industrial Co., Ltd.), 07 September, 2001 (07.09.01), Claim 9 (Family: none) | 1-5 |

☐ Further documents are listed in the continuation of Box C. ☐ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier document but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| 02 December, 2002 (02.12.02) | 17 December, 2002 (17.12.02) |

| Name and mailing address of the ISA/ | Authorized officer |
| --- | --- |
| Japanese Patent Office | |
| Facsimile No. | Telephone No. |

Form PCT/ISA/210 (second sheet) (July 1998)